# EUROPÄISCHE PATENTSCHRIFT

(11) **EP 0 433 700 B1**
(45) Veröffentlichungstag und Bekanntmachung des Hinweises auf die Patenterteilung: **12.01.1994**
(21) Anmeldenummer: 90122452.7
(22) Anmeldetag: 26.11.1990
(51) Int. Cl.: B60G 17/04

(54) **Vorrichtung zur Neigungskompensation des Aufbaus von Kraftfahrzeugen**
Device for the compensation of tilting of the body of a motor vehicle
Dispositif pour la compensation de l'inclinaison de la carrosserie d'un véhicule automobile

(30) Priorität: 18.12.1989 DE 3941671
(43) Veröffentlichungstag der Anmeldung: 26.06.1991
(73) Patentinhaber: Volkswagen Aktiengesellschaft, 38436 Wolfsburg (DE)
(72) Erfinder: Dreyer, Wilhelm, Dr., W-3320 Salzgitter 51 (DE); Steinkopff, Karl-Heinz, W-3300 Braunschweig (DE); Hoffmann, Günter, W-3170 Gifhorn (DE); Poschmann, Michael, W-3306 Lehre (DE); Oehlerking, Conrad, W-3174 Wedelheine (DE)

(56) Entgegenhaltungen:
- EP-A- 0 260 418
- EP-A- 0 373 327
- DE-A- 3 841 771
- FR-A- 2 125 217
- GB-A- 1 245 805
- GB-A- 2 128 142
- US-A- 3 547 466
- PATENT ABSTRACTS OF JAPAN vol. 11, no. 57 (M-564)(2504) 21 Februar 1987,& JP-A-61 218414 (DAIHATSU MOTOR CO.) 27 September 1986,

## Beschreibung

Die Erfindung bezieht sich auf eine Vorrichtung zur Neigungskompensation des Aufbaus sowie zur Schwingungsdämpfung von Kraftfahrzeugen der in den Oberbegriffen der Patentansprüche 1 und 7 genannten Art. Eine derartige Vorrichtung ist aus GB-A-2 128 142 bekannt.

Im Bemühen, die Fahrsicherheit und den Fahrkomfort weiter zu verbessern, werden die Fahrwerke von Personenkraftfahrzeugen zunehmend mit zwischen Fahrzeugaufbau und Fahrzeugrädern bzw. deren Radführungsgliedern wirksamen quasistatisch sowie dynamisch arbeitenden Verstelleinrichtungen ausgestattet, vorzugsweise in Form von hydraulischen Zweirichtungs-Stellzylindern mit nach Größe und Richtung steuerbarer Stellkraft.

Durch entsprechende Steuerung dieser hydraulischen Zweirichtungs-Stellzylinder kann unter anderem auch ein Nick- und Wankausgleich vorgenommen werden, indem durch die Stellzylinder den jeweiligen Nick- und Wankmomenten entgegengerichtete Momente aufgebracht werden. Durch die hydraulischen Zweirichtungs-Stellzylinder kann das Fahrzeug also in einfacher Weise "horizontiert" und im übrigen die Fahreigenschaften in Abhängigkeit von der jeweiligen Fahrsituation beeinflußt werden.

An sich wäre es denkbar, allein mit solchen zwischen Fahrzeugaufbau und Fahrzeugrädern wirksamen aktiven Stelleinrichtungen den Fahrzeugaufbau abzustützen und ruhig zu halten, das heißt sowohl für eine ausreichende Federung sowie Schwingungsdämpfung als auch für einen Wank- und Nickausgleich o. ä. zu sorgen. Für eine derartige Lösung müßten jedoch entsprechend große Stelleistungen zur Verfügung gestellt werden, was aufwendig und teuer ist und deshalb in der Praxis wohl nur in besonderen Anwendungsfällen, wie z. B. im Rennsport oder in der allerobersten Fahrzeugklasse realisiert werden dürfte.

In der Praxis sinnvoller erscheint es, solche aktiven Verstelleinrichtungen, das heißt hydraulische Zweirichtungs-Stellzylinder mit nach Größe und Richtung steuerbarer Stellkraft ausschließlich zum Ausgleich von Wank- und/oder Nickbewegungen o. ä. einzusetzen, so daß sie lediglich in der Lage sein müssen, den Wank- und/oder Nickmomenten entgegengerichtete Momente aufzubringen, wozu vergleichsweise geringe Stelleistungen erforderlich sind. Die eigentliche Fahrzeugabfederung erfolgt dabei durch übliche Federelemente und zur notwendigen Schwingungsdämpfung werden übliche Teleskop-Stoßdämpfer eingesetzt.

Der Erfindung liegt nun die Aufgabe zugrunde, eine vergleichsweise wenig Bauraum erfordernde Vorrichtung der in den Oberbegriffen der Patentansprüche 1 und 7 genannten Art zu schaffen.

Diese Aufgabe wird durch die Merkmale der Patentansprüche 1 und 7 gelöst.

Vorteilhafte Ausgestaltungen und Weiterbildungen der Erfindung sind in den Unteransprüchen angegeben.

Die erfindungsgemäße Vorrichtung stellt eine kompakte Baueinheit dar, für deren Einbau insbesondere dann, wenn sie Teil einer Federbein- oder Federdämpferanordnung ist, im Vergleich zu üblichen Federbein- bzw. Federdämpferanordnungen kaum zusätzlicher Bauraum erforderlich ist. Darüber hinaus zeichnet sie sich aufgrund der Ausbildung des Zweirichtungs-Stellzylinders als Gleichlaufzylinder durch eine besonders gute Regelbarkeit aus.

Anhand einiger in der Zeichnung dargestellter Ausführungsbeispiele wird die Erfindung nachstehend näher erläutert.

In der Zeichnung zeigen in zum Teil schematischer und prinzipienhafter Darstellung
- Figur 1: den Längsschnitt der erfindungsgemäßen Vorrichtung gemäß einem ersten Ausführungsbeispiel mit als Einrohrdämpfer ausgebildetem Stoßdämpfer,
- Figur 2: den Längsschnitt der erfindungsgemäßen Vorrichtung gemäß einem zweiten Ausführungsbeispiel mit als Zweirohrdämpfer ausgebildetem Stoßdämpfer,
- Figur 3: den Längsschnitt der erfindungsgemäßen Vorrichtung gemäß einem dritten Ausführungsbeispiel,
- Figur 3a: den Querschnitt einer Detail-Variante des dritten Ausführungsbeispiels und
- Figur 4: den Längsschnitt der erfindungsgemäßen Vorrichtung gemäß einem vierten Ausführungsbeispiel.

In der Zeichnung sind jeweils nur die für das Verständnis der Erfindung notwendigen Einzelheiten der Vorrichtung dargestellt und soweit sie in ihrer Funktionsweise übereinstimmen in den verschiedenen Ausführungsbeispielen gleich beziffert.

Insbesondere nicht dargestellt sind die zur Steuerung und/oder Regelung des hydraulischen Zweirichtungs-Stellzylinders notwendigen Druckerzeugungs- und Ventileinrichtungen sowie elektronischen Steuer- und/oder Regeleinrichtungen. Vorzugsweise wird zur Steuerung des hydraulischen Zweirichtungs-Stellzylinders jedoch ein als offener Kreis ausgebildeter Hydraulikkreis mit ständig fördernder Hydraulikpumpe eingesetzt, wobei steuerbare Ventileinrichtungen als steuerbare Drosselventile ausgebildet sind, deren Durchflußquerschnitt jeweils zwischen einem von Null verschiedenen Mindestwert und einem Höchstwert verstellbar sind, wie dies in der nicht vorveröffentlichten prioritätsälteren deutschen Patentanmeldung P 39 35 595 offenbart ist.

Die erfindungsgemäße Vorrichtung zur Neigungskompensation des Aufbaus sowie zur Schwingungsdämpfung von Kraftfahrzeugen besteht jeweils aus einem hydraulischem Teleskop-Stoßdämpfer 1 und einem hydraulischen Zweirichtungs-Stellzylinder 2 mit nach Größe und Richtung steuerbarer Stellkraft, die zu einer integrierten Baueinheit 3 zusammengefügt sind. Der Zweirichtungs-Stellzylinder 2 ist dabei in vorteilhafter Weise räumlich derart angeordnet, daß er als Gleichlaufzylinder ausgebildet ist, das heißt derart, daß bei Stellbewegungen in seinen durch seinen Stellkolben 5 voneinander getrennten Teilarbeitskammern jeweils gleichgroße, jedoch entgegengesetzte Volumenänderungen stattfinden, was regelungstechnisch von Vorteil ist, weil für die nicht weiter dargestellte Steuer- und Regeleinrichtung des hydraulischen Zweirichtungs-Stellzylinders dann für beide Stellrichtungen jeweils gleiche stelltechnische (Volumenänderung) Voraussetzungen vorliegen.

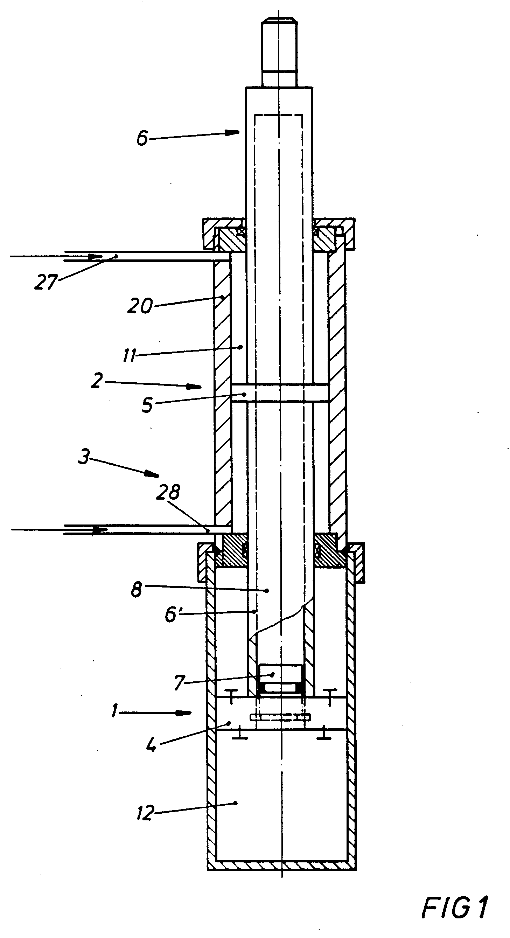

In den Ausführungsbeispielen gemäß den Figuren 1 bis 3 sind der hydraulische Teleskop-Stoßdämpfer 1 sowie der hydraulische Zweirichtungs-Stellzylinder 2 axial unmittelbar aneinandergefügt und mit einer ihnen beiden gemeinsamen Kolbenstange 6 ausgestattet, welche sowohl den Dämpferkolben 4 des Teleskop-Stoßdämpfers 1 als auch den Stellkolben 5 des Zweirichtungs-Stellzylinders 2 trägt. Der Zweirichtungs-Stellzylinder 2 ist dabei räumlich auf der Kolbenstangenaustrittsseite der Baueinheit 3 angeordnet, wobei der Durchmesser des Stellkolbens 5 sowie der Stellzylinder-Arbeitskammer 11 kleiner bemessen ist als der Durchmesser des Dämpferkolbens 4 sowie der Dämpferarbeitskammer 12. Durch diese Bemessung wird erreicht, daß man die Bauteile ineinanderfügen und das verlängerte Dämpferrohr gleichzeitig zur Abstützung herangezogen werden kann.

Im Ausführungsbeispiel der Figur 1 ist der Teleskops-Stoßdämpfer 1 als Einrohrdämpfer mit einem durch einen Trennkolben 7 von der Dämpfer-Arbeitskammer 12 abgetrennten und durch Gas- oder Luftdruck belasteten Ausgleichsraum 8 ausgebildet. Um Bauraum, insbesondere Baulänge zu sparen, ist die Kolbenstange 6 zur Bildung des Ausgleichsraums 8 als auf der dämpferkolbenseitigen Stirnseite offenes Rohr 6' ausgebildet; der schwimmende Trennkolben 7 ist dabei im Rohrinneren angeordnet.

Im Zylindergehäuse 20 des Stellzylinders 2 ist im Bereich der beiden Zylinderenden jeweils ein Druckleitungsanschluß 27 und 28 angeordnet, über welche die durch den Stellkolben 5 voneinander getrennten beiden Teilkammern der Stellzylinder-Arbeitskammer 11 von der nicht weiter dargestellten Steuer- und Regeleinrichtung der Vorrichtung den jeweiligen Regelerfordernissen entsprechend mit Hydraulikdruck beaufschlagt werden können. Eine Druckbeaufschlagung der oberen Teilkammer über den Druckanschluß 27 bewirkt dabei ein Zusammenfahren, d. h. eine axiale Verkürzung, und eine Druckbeaufschlagung der unteren Teilkammer über den Druckleitungsanschluß 28 ein Auseinanderfahren, d. h. eine axiale Verlängerung der Vorrichtung 3; im ersten Falle wird von der Vorrichtung 3 somit eine ziehende und im zweiten Falle eine drückende Stellkraft erzeugt, deren Größe u. a. von der Höhe des aufgebrachten Hydraulikdrucks abhängt.

Bei nichtaktivem Stellzylinder, d. h. wenn den beiden Teilkammern der Stellzylinder-Arbeitskammer 11 vom äußeren steuerbaren Hydraulikkreis, d. h. von der nicht weiter dargestellten Steuer- und Regeleinrichtung kein Hydraulikdruck aufgeprägt wird, arbeitet die integrierte Vorrichtung 3 in üblicher Weise schwingungsdämpfend als Stoßdämpfer, dessen Dämpferkraft bzw. Dämpfercharakteristik u. a. durch die nur schematisch angedeuteten und nicht weiter bezifferten üblichen Zug- und Druckventile im Dämpferkolben 4 bestimmt wird; der Stellkolben 5 des Zweirichtungs-Stellzylinders läuft hierbei nur leer bzw. lastlos mit. Dieser Betriebszustand liegt stets dann vor, wenn von der Vorrichtung 3 keine kompensierenden Stellkräfte bzw. Momente aufzubringen sind, z. B. dann, wenn keine Wank- und/oder Nickneigung besteht, sondern lediglich fahrbahnbedingte Schwingungen zu dämpfen sind.

Wenn jedoch betriebsmäßig Wank- und/oder Nickmomente o. ä. - z. B. beim Durchfahren von Kurven bzw. beim Bremsen und/oder beim Beschleunigen - auftreten und diese Momente durch die Vorrichtung 3 kompensiert werden sollen, dann wird je nach Regelerfordernis entweder die obere oder die untere Teilkammer der Stellzylinder-Arbeitskammer 11 über die Druckzuleitung 27 bzw. 28 mit Hydraulikdruck ausreichender Höhe beaufschlagt, um eine diesen störenden Wank- bzw. Nickmomenten entgegenwirkende Stellkraft zu erzeugen.

Es versteht sich, daß die den einzelnen Fahrzeugrädern zugeordneten, jeweils zwischen Fahrzeugaufbau und Fahrzeugrad wirksamen Vorrichtungen 3 von der nicht weiter dargestellten Steuer- und Regeleinrichtung sehr unterschiedlich ausgesteuert werden müssen. So werden z. B. zur Kompensation von bei Kurvenfahrt auftretenden Wankmomenten jeweils die Vorrichtungen der kurvenäußeren Räder derart ausgesteuert, daß sie Druckkräfte abgeben, während von den den kurveninneren Rädern zugeordneten Vorrichtungen gleichzeitig Zugkräfte aufgebracht werden. In entsprechender Weise müssen beim Bremsnicken die den Vorderrädern zugeordneten Vorrichtungen Druck- und die den Hinterrädern zugeordneten Vorrichtungen Zugkräfte erzeugen.

Es hängt nun von der Art des zur Steuerung und Regelung des hydraulischen Zweirichtungs-Stellzylinders 2 der Vorrichtung 3 eingesetzten äußeren Hydraulikkreises bzw. der hierzu eingesetzten Steuer- und Regeleinrichtung ab, ob es während der momentenkompensierenden Stellaktivitäten des Zweirichtungs-Stellzylinders 2 noch zu - fahrbahnbedingten - vertikalen Radbewegungen relativ zum Fahrzeugaufbau kommen kann oder nicht. Wenn der steuernde und regelnde äußere Hydraulikkreis des Zweirichtungs-Stellzylinders 2 entsprechend der vorerwähnten älteren deutschen Patentanmeldung P 39 35 595 ausgebildet ist, das heißt als offener Kreis mit ständig fördernder Hydraulikpumpe und mit als steuerbare Drosselventile ausgebildeten steuerbaren Ventileinrichtungen, deren Durchflußquerschnitte jeweils zwischen einem von Null verschiedenen Mindestwert und einem Höchstwert verstellbar sind, dann werden solche relativen Radbewegungen ermöglicht, die dann in üblicher Weise vom Teleskop-Stoßdämpfer 1 gedämpft werden; trotz Stellaktivität des Zweirichtungs-Stellzylinders liegen somit komfortable Fahreigenschaften vor.
Wenn der äußere Hydraulikkreis des Zweirichtungs-Stellzylinders dagegen in üblicher Weise als geschlossener Kreis und mit nur ein- und ausschaltbaren Ventileinrichtungen ausgebildet ist, dann werden natürlich auch bei Einsatz der erfindungsgemäßen Vorrichtung während der Stellaktivitäten des Zweirichtungs-Stellzylinders Fahrbahnstöße in für aktive Fahrwerke mit solchen Steuer- und Regeleinrichtungen üblicher Weise voll in den Fahrzeugaufbau eingeleitet, weil dann relative vertikale Radbewegungen vom aktiven Stellzylinder verhindert werden.

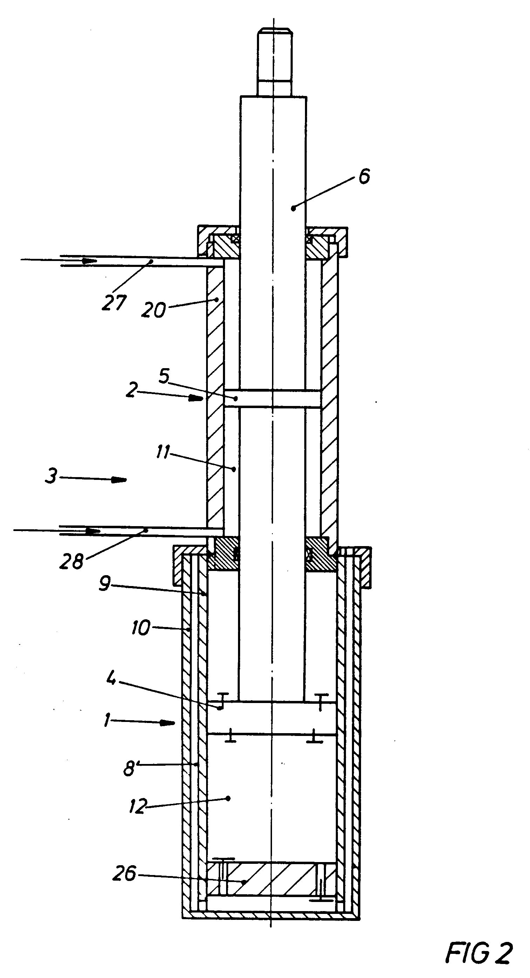

Bei der in Figur 2 dargestellten erfindungsgemäßen Vorrichtung ist der Teleskop-Stoßdämpfer 1 in bekannter Weise als Zweirohrdämpfer ausgebildet, bei dem zwischen einem Innenrohr, dem eigentlichen Dämpferrohr 9, und einem dazu konzentrischen Außenrohr, dem Behälterrohr 10, ein mit der Atmosphäre in Verbindung stehender, das heißt druckloser Ausgleichsraum 8' angeordnet ist, welcher von der Dämpfer-Arbeitskammer 12 durch ein übliches Bodenventil 26 mit Zug- und Druckstufe getrennt ist. In ihrer Funktionsweise stimmt diese Vorrichtung mit der der Vorrichtung gemäß Figur 1 überein.

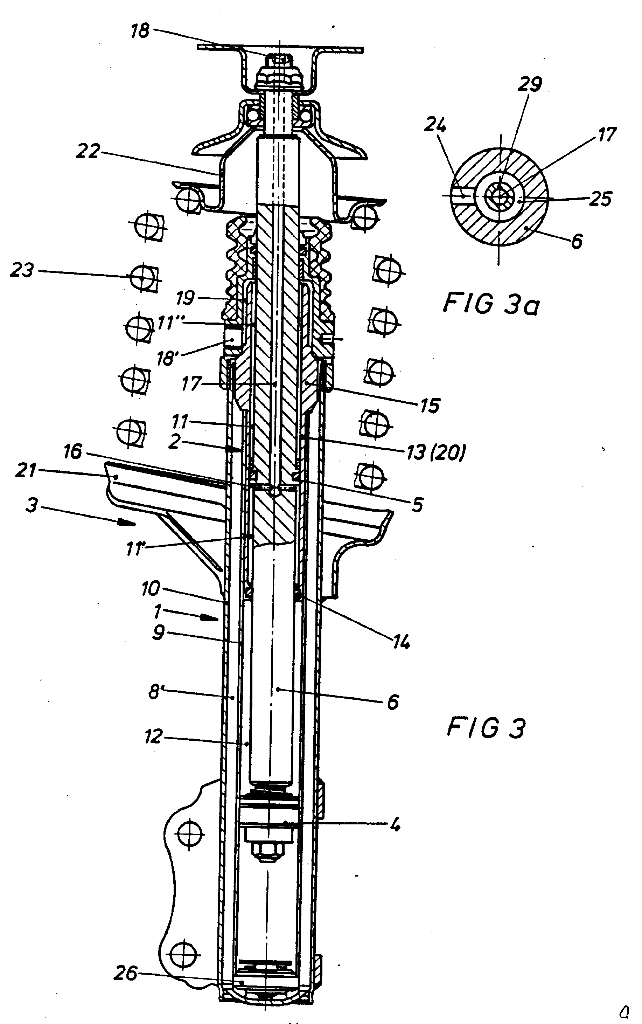

Die erfindungsgemäße Vorrichtung kann mit Vorteil als Teil einer Federbein- oder Federdämpferanordnung ausgebildet sein, wie dies im Ausführungsbeispiel gemäß Figur 3 dargestellt ist.
Das dargestellte Federbein stimmt in seinem äußeren Aufbau weitgehend mit üblichen bekannten Federbeinen überein. Es besteht im wesentlichen aus einem als Zweirohrdämpfer ausgebildeten Teleskop-Stoßdämpfer 1 und einer diesen umschließenden Schraubenfeder 23, die sich in üblicher Weise mit ihrem unteren Federende auf einem am Behälterrohr 10 befestigten unteren Federteller 21 und mit ihrem oberen Federende an einem an der Kolbenstange 6 befestigten oberen Federteller 22 abstützt. Der hydraulische Zweirichtungs-Stellzylinder 2 der Vorrichtung 3 ist im oberen Bereich des Federbeins, das heißt auf der Kolbenstangenaustrittsseite angeordnet. Die Stellzylinder-Arbeitskammer 11 wird hier durch eine Zylinderhülse 13 gebildet, die mit mindestens einem Teil ihrer Länge in das Innen- bzw. Dämpferrohr 9 eingeschoben ist und deren im Dämpferrohr steckendes Ende einen dichtend an der Kolbenstange 6 anliegenden Innenbund 14 aufweist, welcher die Stellzylinder-Arbeitskammer 11 nach unten axial begrenzt und gleichzeitig für die Kolbenstange 6 als Führung sowie zur Biegemomentenabstützung dient.
Das aus dem Innen- bzw. Dämpferrohr 9 axial herausragende Ende der Zylinderhülse 13 trägt einen Außenbund 15, der zumindest teilweise in das Außen- bzw. Behälterrohr 10 eingeschoben ist und so die zwischen Dämpfer und Behälterrohr 9 bzw. 10 gebildete drucklose Ausgleichskammer 8' des Federbeins nach oben axial begrenzt.

Die Druckbeaufschlagung der durch den Stellkolben 5 voneinander getrennten beiden Teilkammern 11' und 11'' der Stellzylinder-Arbeitskammer erfolgt im dargestellten Ausführungsbeispiel zum einen über einen am freien Ende der Kolbenstange 6 angeordneten ersten Druckanschluß 18 sowie über einen im oberen Bereich des Federbeins radial angeordneten zweiten Druckanschluß 18'. Zu diesem Zweck ist in der Kolbenstange 6 eine am ersten Druckanschluß 18 beginnende und über mindestens einen ersten Radialdurchlaß 16 unterhalb des Stellkolbens 5 in der zwischen dem Stellkolben und dem Innenbund 14 gebildeten ersten Teilkammer 11' der Stellzylinder-Arbeitskammer 11 mündende erste Axialbohrung 17 angeordnet, über welche diese Teilkammer gesteuert mit Hydraulikdruck beaufschlagt werden kann, um die Vorrichtung zwecks Abgabe einer Druckkraft axial auseinanderzufahren. Die zweite, nämlich die obere Teilkammer 11'' der Stellzylinder-Arbeitskammer 11 steht über eine umlaufende Ringkammer 19 o. ä. mit dem zweiten Druckanschluß 18' in Verbindung.

Abweichend vom dargestellten Ausführungsbeispiel ist es - wie in der prinzipienhaften Querschnitt-Darstellung der Figur 3a angedeutet - natürlich auch möglich, in der Kolbenstange zusätzlich noch eine am freien Kolbenstangenende beginnende und über mindestens einen zweiten Radialdurchlaß 24 oberhalb des Stellkolbens 5 in der dort gebildeten zweiten Teilkammer 11'' der Stellzylinder-Arbeitskammer 11 mündende zweite Axialbohrung o. ä. 25 anzuordnen, über welche dann die zweite Teilkammer 11' gesteuert mit Hydraulikdruck beaufschlagt werden kann. Erste und zweite Axialbohrung 17 bzw. 25 könnten dabei durch ein Zwischenrohr 29 o. ä. voneinander getrennt werden. Es versteht sich, daß in diesem Falle die in Figur 3 dargestellte Ringkammer 19 in Fortfall käme und daß der zweite Druckanschluß 18' ebenfalls im Bereich des freien Kolbenstangenendes anzuordnen ist.

Für die in Figur 3 beispielhaft dargestellte erfindungsgemäße Vorrichtung 3 in Form eines Federdämpfers bzw. Federbeins wird in vorteilhafter Weise axial nur geringfügig mehr Baulänge benötigt als für übliche bekannte Federbeine bzw. Federdämpfer alleine. In geschickter Weise wird nämlich im Federdämpfer bzw. Federbein axial sowieso vorhandener, für die schwingungsdämpfende Dämpferkolbenbewegung jedoch nicht benötigter Zylinderraum für die Unterbringung des als Gleichlaufzylinder ausgebildeten Stellzylinders 2 ausgenutzt. Die Zylinderrohrlänge bekannter Federdämpfer bzw. Federbeine ist nämlich stets länger als der maximale Kolbenweg; zwischen maximal ausgefahrenem Kolben und Austritt der Kolbenstange aus dem Dämpferrohr befindet sich im allgemeinen ein Rohrbereich, dessen Länge zur Biegemomentenabstützung der Kolbenstange im ausgefahrenen Zustand erforderlich ist! Die axiale Baulänge der erfindungsgemäßen integrierten Baueinheit ist also erheblich weniger lang als die Summe aus den axialen Längen eines separaten Federbeins bzw. Federdämpfers und eines separaten Stellzylinders mit gleichen Kolbenwegen.

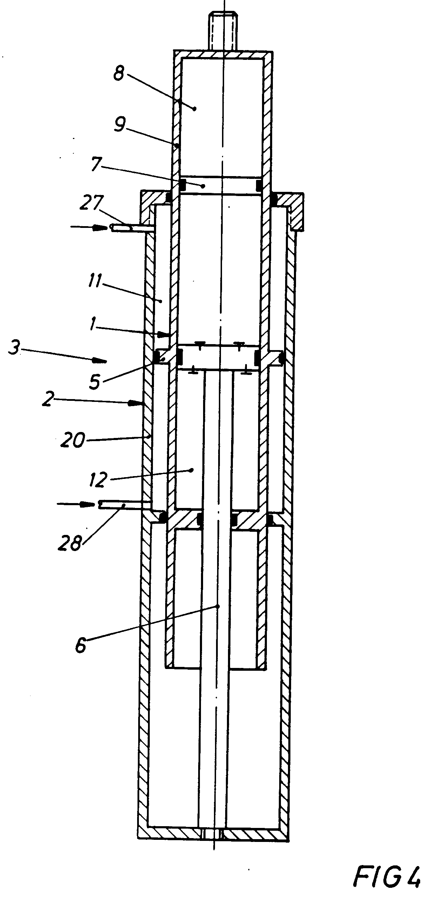

Die bauliche Integration von Teleskop-Stoßdämpfer 1 und Zweirichtungs-Stellzylinder 2 kann - wie in Figur 4 beispielhaft dargestellt - auch in der Weise erfolgen, daß Teleskopstoßdämpfer und Stellzylinder konzentrisch ineinandergeschachtelt sind, wodurch sich eine etwas kürzere axiale Baulänge erreichen läßt.

Im dargestellten Ausführungsbeispiel umschließt der Zweirichtungs-Stellzylinder 2 den Teleskop-Stoßdämpfer 1, der im Ausführungsbeispiel als Einrohrdämpfer ausgebildet ist, grundsätzlich aber auch als Zweirohrdämpfer ausgebildet sein könnte. Das einenends aus dem Zylindergehäuse 20 des Stellzylinders 2 heraustretende Dämpferrohr 9 des Teleskop-Stoßdämpfers 1 ist hierbei als den Stellkolben 5 tragende Kolbenstange des Stellzylinders 2 ausgenutzt. Das freie Ende der Dämpferkolbenstange 6 selbst ist dagegen fest mit dem Zylindergehäuse 20, und zwar mit dem unteren Ende verbunden. Auch diese Vorrichtung kann natürlich nach Art der in Figur 3 dargestellten Anordnung als eine Art Federbein ausgebildet werden, das heißt die beiden zueinander teleskopierbaren äußeren Bauteile dieser Vorrichtung, nämlich einerseits das Zylindergehäuse 20 und andererseits das axial heraustretende Dämpferrohr 9 können mit Federtellern zur Abstützung einer Schraubenfeder oder einer Luftfeder o. ä. ausgestattet sein.

## Patentansprüche

1. Vorrichtung zur Neigungskompensation des Aufbaus sowie zur Schwingungsdämpfung von Kraftfahrzeugen mit einem als Gleichlaufzylinder ausgebildeten hydraulischen Zweirichtungs-Stellzylinder (2) mit nach Größe und Richtung steuerbarer Stellkraft und mit einem hydraulischen Teleskop-Stoßdämpfer (1), die unmittelbar axial aneinanderliegend zu einer integrierten Baueinheit (3) mit einer sowohl den Stellkolben (5) als auch den Dämpferkolben (4) tragenden gemeinsamen Kolbenstange (6) zusammengefügt sind, wobei der Zweirichtungs-Stellzylinder (2) räumlich auf der Kolbenstangenaustrittseite der Baueinheit (3) angeordnet ist,
**dadurch gekennzeichnet,** daß der Durchmesser des Stellkolbens (5) und der Stellzylinder-Arbeitskammer (11) kleiner ist als der Durchmesser des Dämpferkolbens (4) und der Dämpfer-Arbeitskammer (12).

2. Vorrichtung nach Anspruch 1,
**dadurch gekennzeichnet**, daß der Teleskop-Stoßdämpfer (1) als Zweirohrdämpfer mit einem Ausgleichsraum (8') ausgebildet ist, der zwischen einem mit dem Dämpferkolben (4) zusammenwirkenden Innenrohr (Dämpferrohr 9) und einem dazu konzentrischen Außenrohr (Behälterrohr 10) angeordnet ist.

3. Vorrichtung nach Anspruch 2,
**dadurch gekennzeichnet,** daß die Stellzylinder-Arbeitskammer (11) durch eine mit mindestens einem Teil ihrer Länge in das Innenrohr (Dämpferrohr 9) eingeschobene Zylinderhülse (13) gebildet ist, deren im Innenrohr (Dämpferrohr 9) steckendes Ende einen diese Arbeitskammer (1) axial begrenzenden Innenbund (14) aufweist, der dichtend an der Kolbenstange (6) anliegt und für diese als Führung und Biegemomentabstützung dient.

4. Vorrichtung nach Anspruch 3,
**dadurch gekennzeichnet,** daß das aus dem Innenrohr (Dämpferrohr 9) axial herausragende Ende der Zylinderhülse (13) einen Außenbund (15) trägt, der zumindest teilweise in das Außenrohr (Behälterrohr 10) eingeschoben ist und die zwischen Innen- und Außenrohr (9, 10) gebildete Ausgleichskammer (8') axial begrenzt.

5. Vorrichtung nach Anspruch 4,
**dadurch gekennzeichnet,** daß in der Kolbenstange (6) eine an deren freiem Ende beginnende und über mindestens einen ersten Radialdurchlaß (16) unterhalb des Stellkolbens (5) in der zwischen diesem und dem Innenbund (14) gebildeten ersten Teilkammer (11') der Stellzylinder-Arbeitskammer (11) mündende erste Axialbohrung (17) angeordnet ist, über welche diese Teilkammer (11') gesteuert mit Hydraulikdruck beaufschlagbar ist.

6. Vorrichtung nach Anspruch 5,
**dadurch gekennzeichnet,** daß in der Kolbenstange (6) eine an deren freien Ende beginnende und über mindestens einen zweiten Radialdurchlaß (24) oberhalb des Stellzylinders (5) in der dort gebildeten zweiten Teilkammer (11'') der Stellzylinder-Arbeitskammer (11) mündende - vorzugsweise konzentrisch zur ersten Axialbohrung (17) verlaufende - zweite Axialbohrung (25) angeordnet ist, über welche die zweite Teilkammer (11'') gesteuert mit Hydraulikdruck beaufschlagbar ist.

7. Vorrichtung zur Neigungskompensation des Aufbaus sowie zur Schwingungsdämpfung von Kraftfahrzeugen, mit einem als Gleichlaufzylinder ausgebildeten hydraulischen Zweirichtungs-Stellzylinder (2) mit nach Größe und Richtung steuerbarer Stellkraft und mit einem hydraulischen Teleskop-Stoßdämpfer (1), die unmittelbar zu einer integrierten Baueinheit (3) zusammengefügt sind,
**dadurch gekennzeichnet,** daß der Zweirichtungs-Stellzylinder (2) und Teleskop-Stoßdämpfer (1) konzentrisch ineinandergeschachtelt sind.

8. Vorrichtung nach Anspruch 7,
**dadurch gekennzeichnet,** daß der Zweirichtungs-Stellzylinder (2) den als Einrohr- oder Zweirohrdämpfer ausgebildeten Teleskop-Stoßdämpfer (1) konzentrisch umschließt, wobei das einenends aus dem Zylindergehäuse (20) des Zweirichtungs-Stellzylinders (2) heraustretende Dämpferrohr (9) des Teleskop-Stoßdämpfers (1) als den Stellkolben (5) tragende Kolbenstange des Zweirichtungs-Stellzylinders (2) dient, während das freie Ende der Dämpferkolbenstange (6) fest mit dem Zylindergehäuse (2) verbunden ist.

9. Vorrichtung nach einem der Ansprüche 1 bis 8,
**dadurch gekennzeichnet,** daß sie Teil einer Federbein- oder Federdämpferanordnung ist, bei welcher mindestens an einem der beiden zueinander teleskopierbaren äußeren Bauteile der Vorrichtung (3) ein Federteller (21 bzw. 22) zur axialen Abstützung einer die Vorrichtung (3) umschließenden Schrauben- oder Luftfeder (23) vorgesehen ist.

## Claims

1. A device for compensating the inclination of the body as well as for damping the vibration of motor vehicles having a hydraulic two-directional adjusting cylinder (2) formed as a parallel-running cylinder, the adjusting cylinder (2) having an adjusting force which can be controlled according to the amount and direction and having a hydraulic telescopic shock absorber (1), the adjusting cylinder (2) and the telescopic shock absorber (1) being assembled together directly axially adjacent to each other to form an integrated component (3) having a common piston rod (6) which supports both the piston rod (5) as well as the damping piston (4), wherein the two-directional adjusting cylinder (2) is disposed spatially on the piston rod exit side of the component (3), characterised in that the diameter of the adjusting piston (5) and the adjusting cylinder working chamber (11) is smaller than the diameter of the damping piston (4) and the damping working chamber (12).

2. A device according to claim 1, characterised in that the telescopic shock absorber (1) is formed as a double-tube damper having a compensating space (8') which is disposed between an inner tube (damping tube 9) which cooperates with the damping piston (4) and an outer tube (container tube 10) which is concentric to the inner tube.

3. A device according to claim 2, characterised in that the adjusting cylinder working chamber (11) is formed by a cylinder sleeve (13) inserted with at least one part of its length into the inner tube (damping tube 9) and the end of the cylinder sleeve (13) extending into the inner tube (damping tube 9) comprises an inner collar 14 which axially delimits this working chamber (1) and the inner collar (14) rests in a sealing manner against the piston rod (6) and serves as a guide and as a bending moment support for the piston rod (6).

4. A device according to claim 3, characterised in that the end of the cylinder sleeve (13) protruding axially out of the inner tube (damping tube 9) supports an outer collar (15) which is inserted at least partially into the outer tube (container tube 10) and the outer collar (15) axially delimits the compensating space (8') between the inner tube (9) and outer tube (10).

5. A device according to claim 4, characterised in that a first axial bore (17) is disposed in the piston rod (6) and the first axial bore (17) begins at the free end of the piston rod and issues by way of at least a first radial passage (16) below the adjusting piston (5) into the first partial chamber (11') of the adjusting cylinder working chamber (11) formed between the piston rod (6) and the inner collar (14) and the partial chamber (11') controlled by hydraulic pressure is influenced by way of the first axial bore (17).

6. A device according to claim 5, characterised in that a second axial bore (25) is disposed in the piston rod (6) and the second axial bore (25) begins at the free end of the piston rod (6) and issues by way of at least a second radial passage (24) above the adjusting cylinder (5) into the second partial chamber (11'') of the adjusting cylinder working chamber (11) formed there, the axial bore (25) extends preferably concentric to the first axial bore (17) and the second partial chamber (11'') controlled by hydraulic pressure is influenced by way of the second axial bore (25).

7. A device for compensating the inclination of the body as well as for damping the vibration of motor vehicles having a hydraulic two-directional adjusting cylinder (2) formed as a parallel-running cylinder, the adjusting cylinder (2) having an adjusting force which can be controlled according to the amount and direction and having a hydraulic telescopic shock absorber (1), the adjusting cylinder (2) and the telescopic shock absorber (1) being assembled together directly to form an integrated component (3), characterised in that the two-directional adjusting cylinder (2) and the telescopic shock absorber (1) nest in each other in a concentric manner.

8. A device according to claim 7, characterised in that the two-directional adjusting cylinder (2) encompasses in a concentric manner the telescopic shock absorber formed as a single tube shock absorber or as a double-tube shock absorber, wherein the damping tube (9) of the telescopic shock absorber (1) protruding out of one end of the cylinder housing (2) of the two-directional adjusting cylinder (2) serves as the piston rod of the two-directional adjusting cylinder supporting the adjusting piston (5), whereas the free end of the damping piston rod (6) is fixedly connected to the cylinder housing (2).

9. A device according to one of the claims 1 to 8, characterised in that the device is part of a shock absorbing leg arrangement or a resilient damping arrangement, wherein for the purpose of axially supporting a helical spring or a pneumatic spring (23) encompassing the device (3) a resilient plate (21 and/or 22) is provided at least on one of the two outer components of the device (3) which fit together in a telescopic manner.

## Revendications

1. Dispositif de compensation de l'inclinaison de la caisse et d'amortissement des oscillations de véhicules automobiles, comprenant un vérin hydraulique (2) réalisé sous forme d'un vérin synchrone, dont la force de réglage est réglable en amplitude et en direction, et comprenant un amortisseur télescopique hydraulique (1), assemblés directement axialement pour former une unité intégrale (3) de construction ayant une tige de piston commune (6) portant le piston (5) de réglage et le piston amortisseur (4), le vérin bidirectionnel (2) étant disposé dans l'espace du côté de la sortie de la tige de piston de l'unité (3) de construction, caractérisé en ce que le diamètre du piston (5) de réglage et celui de la chambre de travail (11) du vérin sont inférieurs aux diamètres du piston amortisseur (4) et de la chambre de travail (12) de l'amortisseur.

2. Dispositif selon la revendication 1, caractérisé en ce que l'amortisseur télescopique (1) est réalisé sous forme d'un amortisseur à double tube comprenant une chambre (8') de travail disposée entre un tube intérieur (tube d'amortisseur 9) coopérant avec le piston amortisseur (4), et un tube- extérieur (tube réservoir 10) concentrique par rapport au premier.

3. Dispositif selon la revendication 2, caractérisé en ce que la chambre de travail (11) du vérin est constituée par une douille cylindrique (13) emmanchée sur une partie au moins de sa longueur dans le tube intérieur (tube amortisseur 9), l'extrémité emmanchée dans le tube intérieur (tube amortisseur 9) de cette douille présentant une collerette intérieure (14) délimitant axialement cette chambre de travail (11), placée en engagement étanche avec la tige (6) de piston, servant de guide et supportant les moments de flexion de cette tige.

4. Dispositif selon la revendication 3, caractérisé en ce que l'extrémité de la douille cylindrique (13), qui fait saillie axialement par rapport au tube intérieur (tube amortisseur 9), porte une collerette extérieure (15) s'introduisant au moins partiellement dans le tube extérieur (tube réservoir 10) et délimitant axialement la chambre (8') de compensation constituée entre les tubes intérieur et extérieur (9, 10).

5. Dispositif selon la revendication 4, caractérisé en ce qu'un premier perçage axial (17) est prévu dans la tige (6) de piston, partant de l'extrémité libre de celle-ci et débouchant, par l'intermédiaire d'au moins un premier passage radial (16), en dessous du piston (5) de réglage, dans la première chambre partielle (11') de la chambre de travail (11) du vérin, formée entre ce piston (5) et la collerette intérieure (14), ce perçage permettant de mettre sous pression hydraulique, de façon contrôlée, cette chambre partielle (11').

6. Dispositif selon la revendication 5, caractérisé en ce qu'un deuxième perçage axial (25) - s'étendant de préférence concentriquement au premier perçage axial (17) - est prévu dans la tige (6) de piston, partant de l'extrémité libre de celle-ci et débouchant, par l'intermédiaire d'au moins un deuxième passage radial (24), au-dessus du piston (5) de réglage, dans la deuxième chambre partielle (11'') de la chambre de travail (11) du vérin, formée à cet endroit, ce perçage permettant de mettre sous pression hydraulique, de façon contrôlée, la deuxième chambre partielle (11'').

7. Dispositif de compensation de l'inclinaison de la caisse et d'amortissement des oscillations de véhicules automobiles, comprenant un vérin hydraulique (2) réalisé sous forme d'un vérin synchrone, dont la force de réglage est réglable en amplitude et en direction, et comprenant un amortisseur télescopique hydraulique (1), assemblés directement en une unité intégrale (3) de construction, caractérisé en ce que le vérin bidirectionnel (2) et l'amortisseur télescopique (1) s'emboîtent concentriquement l'un dans l'autre.

8. Dispositif selon la revendication 7, caractérisé en ce que le vérin bidirectionnel entoure concentriquement l'amortisseur télescopique (1) réalisé sous forme d'un amortisseur monotube ou à double tube, le tube d'amortisseur (9) de l'amortisseur télescopique (1), qui fait saillie d'un côté du corps cylindrique (20) du vérin bidirectionnel (2), servant de tige de piston portant le piston (5) de réglage du vérin bidirectionnel (2), alors que l'extrémité libre de la tige (6) du piston amortisseur est reliée de façon fixe au corps cylindrique (20).

9. Dispositif selon l'une des revendications 1 à 8, caractérisé en ce qu'il fait partie d'un agencement de jambe de suspension ou de jambe de suspension et d'amortissement, où l'un au moins des deux composants télescopables extérieurs du dispositif (3) porte une cuvette de ressort (21 ou 22) assurant le support axial d'un ressort hélicoïdal ou d'un ressort à air (23) entourant le dispositif (3).
